# EUROPÄISCHE PATENTANMELDUNG

(11) **EP 2 765 266 A2**
(43) Veröffentlichungstag der Anmeldung: **13.08.2014**
(21) Anmeldenummer: 14154854.5
(22) Anmeldetag: 12.02.2014
(51) Int. Cl.: E05B 71/00, B62H 5/00, E05B 73/00

(54) **Schließkloben**

(30) Priorität: 12.02.2013 DE 102013202241
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Ein Schließkloben für ein Fahrzeugschloss, insbesondere Zweiradschloss, mit einem sich entlang einer Längsachse erstreckenden, ein erstes und ein zweites freies Ende aufweisenden Klobengehäuse, wobei das Klobengehäuse an seinem ersten Ende einen Befestigungsabschnitt zur Befestigung des Schließklobens an einem flexiblen Sicherungselement und an seinem zweiten Ende einen Verriegelungsabschnitt aufweist, welcher zur Verriegelung des Schließklobens an einem zugeordneten Schloss vorgesehen ist, ist dadurch gekennzeichnet, dass das Klobengehäuse mehrteilig mit zumindest einem ersten Gehäuseteil und einem zweiten Gehäuseteil ausgebildet ist.

## Beschreibung

Die vorliegende Erfindung betrifft einen Schließkloben für ein Fahrzeugschloss, insbesondere ein Zweiradschloss, mit einem sich entlang einer Längsachse erstreckenden, ein erstes und ein zweites freies Ende aufweisenden Klobengehäuse, wobei das Klobengehäuse an seinem ersten Ende einen Befestigungsabschnitt zur Befestigung des Schließklobens an einem flexiblen Sicherungselement und an seinem zweiten Ende einen Verriegelungsabschnitt aufweist, welcher zur Verriegelung des Schließklobens an einem zugeordneten Schloss vorgesehen ist.

Ein derartiger Schließkloben dient dem Diebstahlschutz. Bei dem flexiblen Sicherungselement kann es sich beispielsweise um ein Kabel, ein insbesondere kunststoffummanteltes Stahlseil, eine Kette oder dergleichen handeln, mit dessen Hilfe das zu sichernde Fahrzeug, insbesondere Zweirad, etwa an einem ortsfesten Gegenstand gegen eine unbefugte Benutzung gesichert werden kann. Das Sicherungselement kann hierbei als Schlaufe ausgebildet sein, bei welcher beide Enden an dem zugeordneten Schloss verriegelt bzw. dauerhaft befestigt sind. Es ist auch möglich, an einem Ende des flexiblen Sicherungselements eine Öse (z.B. Metallring) oder eine kleine Schlaufe vorzusehen, um eine den ortsfesten Gegenstand umgreifende Schlinge bilden zu können. Hierfür wird das andere, den Schließkloben aufweisende Ende des Sicherungselements zunächst um den ortsfesten Gegenstand geschlungen, sodann durch die Öse oder Schlaufe des flexiblen Sicherungselements geführt und schließlich an dem Schloss des Fahrzeugs verriegelt. Alternativ kann das Sicherungselement auch als Punkt-zu-Punkt-Verbindung ausgebildet sein, bei welcher das eine, den Schließkloben aufweisende Ende des Sicherungselements an dem Schloss des Fahrzeugs verriegelt wird und das andere Ende des Sicherungselements an dem ortsfesten Gegenstand dauerhaft befestigt ist. Oder das eine, den Schließkloben aufweisende Ende des Sicherungselements wird an dem ortsfesten Gegenstand verriegelt, während das andere Ende des Sicherungselements an dem Fahrzeug dauerhaft befestigt ist. Insbesondere kann bei einer solchen Punkt-zu-Punkt-Verbindung auch ein Sicherungselement zum Einsatz gelangen, das an beiden Enden einen jeweiligen Schließkloben aufweist und an beiden Enden verriegelt wird (an dem Schloss des Fahrzeugs einerseits und an einem ortsfesten Schloss andererseits).

Der Schließkloben bildet somit eine mechanische Schnittstelle zwischen dem Sicherungselement und dem zugeordneten Schloss. Hierzu ist es erforderlich, den Schließkloben in einfacher Weise und zugleich dauerhaft und manipulationssicher an dem Sicherungselement zu befestigen. Für Fahrzeuge mit elektrischem Antrieb kann es wünschenswert sein, in den Schließkloben zusätzlich eine elektrische Schnittstelle zu integrieren.

Es ist daher die Aufgabe der vorliegenden Erfindung, einen Schließkloben zu schaffen, der einfach zu montieren ist und eine dauerhafte Verbindung mit dem Sicherungselement gewährleistet. Ferner soll es möglich sein, Zusatzfunktionen in den Kloben zu integrieren.

Die Lösung der Aufgabe erfolgt durch einen Schließkloben mit den Merkmalen des Anspruchs 1. Erfindungsgemäß ist vorgesehen, dass das Klobengehäuse mehrteilig mit zumindest einem ersten Gehäuseteil und einem zweiten Gehäuseteil ausgebildet ist. Durch die Mehrteiligkeit des Klobengehäuses ist ein verbesserter Zugang zu dem Inneren des Klobengehäuses gegeben. Wenn der Befestigungsabschnitt beispielsweise einen stirnseitigen Durchgang bzw. eine stirnseitige Befestigungsöffnung in dem Klobengehäuse umfasst, kann durch die Mehrteiligkeit des Gehäuses ein beidseitiger Zugang zu dem Durchgang gewährleistet werden. So kann etwa das Sicherungselement durch den Durchgang durchgesteckt und mit geeigneten Mitteln, z.B. einer im Klobengehäuse angeordneten Seilklemme, gegen ein Herausziehen aus dem Durchgang gesichert werden. Grundsätzlich kann die Befestigung des Sicherungselements an dem Befestigungsabschnitt auf jede geeignete Weise erfolgen, beispielsweise durch Verschrauben, Vernieten, Verklemmen, Verschweißen, Verknoten oder dergleichen.

Indem das Klobengehäuse einen Hohlkörper bildet, können in den Schließkloben zusätzliche Funktionen oder Bauelemente integriert werden.

Das Klobengehäuse weist bevorzugt eine im Wesentlichen zylindrische Gestalt auf, wobei der Durchmesser über die Länge des Klobengehäuses auch variieren kann. Grundsätzlich ist es auch möglich, dass das Klobengehäuse zumindest abschnittsweise einen nicht-runden Querschnitt aufweist, so dass in einer entsprechend ausgestalteten Schließklobenaufnahme des zugeordneten Schlosses eine Verdrehsicherung erzielt wird. Die Vorteile einer derartigen Verdrehsicherung werden nachfolgend noch näher erläutert. Beispielsweise kann das Klobengehäuse entlang eines Teils seiner Länge oder über seine gesamte Länge einen ovalen, rechteckigen (insbesondere quadratischen) oder hexagonalen Querschnitt aufweisen.

Das Klobengehäuse ist abgesehen von den zwingend erforderlichen Durchgängen (z.B. für das Sicherungselement) vorzugsweise geschlossen. Insbesondere ist der Verriegelungsabschnitt umfänglich geschlossen.

Der Verriegelungsabschnitt kann verschiedene Verriegelungsmittel aufweisen, welche nachfolgend im Zusammenhang mit einer bevorzugten Ausführungsform ebenfalls näher erläutert werden.

Gemäß einer vorteilhaften Ausführungsform ist das Klobengehäuse längs seiner Längsachse zumindest über eine Teillänge in das erste und das zweite Gehäuseteil geteilt. Die Trennstelle zwischen den beiden Gehäuseteilen verläuft zumindest in einem Hauptabschnitt bevorzugt parallel oder zumindest annähernd parallel zur Längsachse des Klobengehäuses. Auch ein schräger Verlauf der Trennstelle relativ zu der Längsachse des Klobengehäuses ist möglich, so dass das jeweilige Gehäuseteil und/oder das gesamte Klobengehäuse beispielsweise eine Keilform besitzt. Hierdurch kann eine große Zugangsöffnung (z.B. zum Zwecke der Montage) bei geöffnetem Klobengehäuse verwirklicht werden.

Gemäß einer weiteren vorteilhaften Ausführungsform erstreckt sich das zweite Gehäuseteil nur über eine Teillänge des Klobengehäuses. Bevorzugt erstreckt sich hierbei das erste Gehäuseteil über die gesamte Länge des Klobengehäuses. Insbesondere kann die verbleibende Teillänge, über die sich das zweite Gehäuseteil nicht erstreckt, alleine durch das erste Gehäuseteil gebildet werden. Hierdurch kann eine hohe Stabilität des Klobengehäuses in besonders stark beanspruchten Bereichen erzielt werden, z.B. an dem genannten Befestigungsabschnitt.

Vorteilhafterweise ist der Befestigungsabschnitt ausschließlich an dem ersten Gehäuseteil vorgesehen. Der Befestigungsabschnitt kann eine umfänglich geschlossene Befestigungsöffnung des ersten Gehäuseteils umfassen, welche insbesondere an einer Stirnseite des Klobengehäuses ausgebildet ist. In dieser Befestigungsöffnung kann, wie bereits erwähnt, ein Endabschnitt des Sicherungselements aufgenommen sein. Hierdurch wird vermieden, dass eine Trennstelle zwischen den Gehäuseteilen durch den Befestigungsabschnitt hindurch verläuft und somit die Stabilität der Befestigung des Sicherungselements an dem Schließkloben beeinträchtigt wird.

Es hat sich als vorteilhaft erwiesen, wenn ein Endabschnitt des zweiten Gehäuseteils, welcher dem Befestigungsabschnitt zugewandt ist, von einer Stirnseite des ersten Endes des Klobengehäuses beabstandet ist. Auch hierdurch wird gewährleistet, dass eine Trennstelle zwischen den beiden Gehäuseteilen außerhalb des Befestigungsabschnitts verläuft. Das zweite Gehäuseteil erstreckt sich hier also nur bis an den Befestigungsabschnitt.

Gemäß einer weiteren vorteilhaften Ausführungsform der Erfindung steht das zweite Gehäuseteil mit seinem Endabschnitt, welcher dem Befestigungsabschnitt zugewandt ist, mit dem ersten Gehäuseteil formschlüssig in Eingriff. Beispielsweise kann an dem genannten Endabschnitt des zweiten Gehäuseteils ein Hintergreifungsabschnitt vorgesehen werden, welcher durch eine im Wesentlichen in Richtung der Längsachse des Klobengehäuses verlaufende Relativbewegung des ersten und des zweiten Gehäuseteils mit einem am ersten Gehäuseteil vorgesehenen Aufnahmeabschnitt in Eingriff bringbar ist und welcher somit dazu angepasst ist, das zweite Gehäuseteil gegen ein Lösen vom ersten Gehäuseteil in einer Richtung senkrecht zur Längsachse des Klobengehäuses zu blockieren. Das zweite Gehäuseteil kann sozusagen in das erste Gehäuseteil eingehängt werden, wodurch ein ungewolltes oder unbefugtes Öffnen des Klobengehäuses wesentlich erschwert wird.

Vorteilhafterweise erstrecken sich das erste und das zweite Gehäuseteil bis an die Stirnseite des zweiten Endes des Klobengehäuses. Die Trennstelle zwischen den beiden Gehäuseteilen verläuft somit durch den Verriegelungsabschnitt und die Stirnseite hindurch, insbesondere in einer Ebene entlang oder parallel zu der Längsachse des Schlossgehäuses. Dadurch wird unter anderem verhindert, dass die beiden Gehäuseteile voneinander getrennt werden können, wenn sich der Schließkloben in einer den Verriegelungsabschnitt umgreifenden Schließklobenaufnahme befindet. Ein weiterer Vorteil dieser Ausgestaltung ergibt sich auch in Zusammenhang mit einer nachfolgend noch näher erläuterten Ausführungsform.

Nach einer weiteren vorteilhaften Ausführungsform der Erfindung umfasst der Schließkloben einen Fixierring, welcher in einer im Bereich des Verriegelungsabschnitts vorgesehenen, in Umfangsrichtung umlaufenden, sich sowohl über das erste als auch über das zweite Gehäuseteil erstreckenden Fixiernut angeordnet ist, um die genannten Gehäuseteile aneinander zu fixieren. Somit verhindert der Fixierring ein ungewolltes oder unbefugtes Öffnen des Klobengehäuses. Der Fixierring kann beispielsweise in der Fixiernut verrastet oder verspannt sein. Die Fixiernut befindet sich vorzugsweise am äußersten Ende des Klobengehäuses, so dass der Fixierring durch Aufpressen in axialer Richtung montiert werden kann.

Um eine zusätzliche Stabilität der Verbindung zwischen den beiden Gehäuseteilen zu gewährleisten, können ein oder mehrere Zapfen an einem der Gehäuseteile vorgesehen werden, die in korrespondierende Aufnahmen am anderen der Gehäuseteile eingreifen. Dadurch wird insbesondere ein Verschieben der Gehäuseteile relativ zueinander verhindert.

Gemäß einer weiteren vorteilhaften Ausführungsform der Erfindung weist das Klobengehäuse im Bereich des Verriegelungsabschnitts eine stirnseitige Öffnung zum Aufnehmen eines elektrischen Steckverbinders auf. Vorzugsweise ist der Steckverbinder Teil des Schließklobens, und das Klobengehäuse umschließt den Steckverbinder umfänglich. Eine derartige Ausgestaltung hat sich insbesondere für solche Fahrzeuge, insbesondere Zweiräder, als vorteilhaft erwiesen, die mit Hilfe oder mit Unterstützung eines elektrischen Antriebs angetrieben werden, beispielsweise so genannte Pedelecs. Derartige Fahrzeuge weisen einen elektrischen Energiespeicher auf, der von Zeit zu Zeit aufgeladen werden muss. Zu diesem Zweck ist es erforderlich, den Energiespeicher mit einer externen Stromquelle zu verbinden. Mit Hilfe des genannten Steckverbinders und einem entsprechenden Gegenstück, das in einer Schließkloben-Aufnahmeöffnung eines zugeordneten Schlosses vorgesehen ist, können der sich am Fahrzeug befindende Energiespeicher und die Stromquelle mittels einer über den Steckverbinder führenden Kabelverbindung verbunden werden. Die Kabelverbindung erstreckt sich zweckmäßigerweise parallel zu dem flexiblen Sicherungselement, welches während des Ladevorgangs mit einer die Stromquelle umfassenden Ladestation verbunden wird.

Um den Steckverbinder zuverlässig im Klobengehäuse zu sichern, können an der Innenseite des Klobengehäuses vorzugsweise in Umfangsrichtung verlaufende Nuten und/oder Vorsprünge vorgesehen sein, die mit korrespondierenden Vorsprüngen und/oder Nuten des Steckverbinders zusammenwirken, so dass der Steckverbinder im Klobengehäuse weder verdreht noch verschoben werden kann.

Bei einer weiteren vorteilhaften Ausführungsform weist das Klobengehäuse wenigstens eine (bezogen auf die Längsachse) seitliche Kabeldurchführung auf. Die Kabeldurchführung befindet sich also am Umfang des Klobengehäuses außerhalb der Stirnflächen. Dadurch beeinträchtigt die Kabeldurchführung die Stabilität einer stirnseitigen Befestigung des Sicherungselements am Schließkloben nicht. Durch die Kabeldurchführung kann beispielsweise die vorstehend genannte Kabelverbindung von einer externen Stromquelle zu dem genannten Steckverbinder hindurchgeführt werden.

Vorteilhafterweise befindet sich die Kabeldurchführung am ersten Ende des Klobengehäuses, jedoch im Wesentlichen außerhalb des Befestigungsabschnitts. Diese Ausgestaltung ermöglicht es insbesondere, die elektrische Kabelverbindung und das Sicherungselement getrennt voneinander auszubilden, was im Vergleich zu einer Lösung, bei der die Kabelverbindung zugleich das Sicherungselement darstellt, die mechanische Festigkeit der Verbindung zwischen dem Schließkloben und dem Sicherungselement erhöht und die Gefahr eines Kabelbruchs verringert.

Im Zusammenhang mit dem Steckverbinder hat sich die vorstehend erläuterte Ausführungsform, bei welcher sich das erste und das zweite Gehäuseteil bis an die Stirnseite des zweiten Endes des Klobengehäuses erstrecken, als besonders vorteilhaft erwiesen. Für die Montage des Steckverbinders in dem Klobengehäuse ist es ausreichend, wenn die beiden Gehäuseteile vorübergehend voneinander getrennt werden. Der Steckverbinder kann dann in eines der Gehäuseteile in die hierfür vorgesehene Öffnung eingelegt werden. Anschließend können die beiden Gehäuseteile wieder zusammengefügt werden, so dass der Steckverbinder zwischen beiden Gehäuseteilen gehalten wird.

Gemäß einer weiteren vorteilhaften Ausführungsform verläuft eine Trennstelle zwischen dem ersten und dem zweiten Gehäuseteil durch die Kabeldurchführung hindurch. Die Kabeldurchführung wird also teilweise vom ersten und teilweise vom zweiten Gehäuseteil umfänglich begrenzt. Bei einem Trennen der Gehäuseteile wird die Kabeldurchführung geöffnet, so dass ein elektrisches Kabel in die Kabeldurchführung eingelegt werden kann. Ein Durchfädeln des Kabels durch die Kabeldurchführung ist nicht erforderlich. Somit können das Kabel und der Steckverbinder bereits vor der Montage im Klobengehäuse zu einer Einheit verbunden werden, was die Montage erheblich vereinfacht.

Es ist von Vorteil, wenn die Kabeldurchführung, vom Befestigungsabschnitt aus betrachtet, in einem Winkel von nicht mehr als 45°, insbesondere in einem Winkel von ca. 30°, bezogen auf die Längsachse des Klobengehäuses verläuft. Die Richtungen, in die ein am Befestigungsabschnitt befestigtes Sicherungselement und ein durch die Kabeldurchführung hindurchgeführtes Kabel vom Schließkloben wegweisen, unterscheiden sich somit lediglich um den genannten Winkel. Dadurch ist es möglich, das Sicherungselement und das Kabel bereits kurz hinter dem Schließkloben zu einem Bündel zusammenzuführen, ohne dass das Kabel im Bereich des Schließklobens eine größere Schlaufe bildet.

Gemäß einer weiteren vorteilhaften Ausführungsform der Erfindung weist der Verriegelungsabschnitt des Klobengehäuses mehrere Verriegelungsmittel auf, welche sowohl an dem ersten als auch an dem zweiten Gehäuseteil vorgesehen sind. Bei den Verriegelungsmitteln handelt es sich beispielsweise um Nuten, Vorsprünge, Eingriffskanäle mit Blockiervorsprüngen oder beliebigen Kombinationen derselben, die mit korrespondierenden Verriegelungselementen zusammenwirken, die in einer Aufnahmeöffnung oder Schließklobenaufnahme eines zugeordneten Schlosses vorgesehen sind. Da jedes Gehäuseteil durch die an ihm vorgesehenen Verriegelungsmittel separat in der Schließklobenaufnahme verriegelt werden kann, bewirken die Verriegelungsmittel zudem eine zusätzliche Sicherung gegen ein Öffnen des Klobengehäuses.

Vorzugsweise unterscheiden sich die an dem ersten Gehäuseteil vorgesehenen Verriegelungsmittel von den an dem zweiten Gehäuseteil vorgesehenen Verriegelungsmitteln, z.B. hinsichtlich ihrer Form. Hierdurch kann auf einfache Weise eine Kodierung der Drehstellung des Schließklobens erreicht werden. Dies ist besonders vorteilhaft, wenn der Schließkloben zugleich einen elektrischen Steckverbinder enthält, dessen elektrische Polung korrekt eingehalten werden muss.

Die vorliegende Erfindung betrifft ferner ein Lade-/Sicherungskabel mit einem Schließkloben nach einer der vorstehend genannten Ausführungsformen und einem flexiblen Sicherungselement, wobei der Befestigungsabschnitt des Schließklobens mit dem Sicherungselement verbunden ist.

Ein Lade-/Sicherungskabel gemäß einer vorteilhaften Ausführungsform umfasst ferner ein elektrisches Kabel, welches mit einem Steckverbinder, der in einer im Bereich des Verriegelungsabschnitts vorgesehenen stirnseitigen Öffnung des Klobengehäuses angeordnet ist, verbunden ist.

Vorteilhafterweise sind das elektrische Kabel und das Sicherungselement in einem gemeinsamen Mantel geführt. Dies erleichtert die Handhabung des Lade-/Sicherungskabels. Der Mantel kann mechanisch verstärkt sein, um einen zusätzlichen Schutz gegen Beschädigungen des elektrischen Kabels und/oder gegen ein Durchtrennen des Sicherungselements zu gewährleisten.

Die vorliegende Erfindung betrifft weiterhin eine Schlossanordnung mit einem Schließkloben gemäß einer der vorstehend beschriebenen Ausführungsformen und mit einem Schloss, das eine Aufnahmeöffnung zum Einführen des Schließklobens, einem senkrecht zu der Längsachse des Klobengehäuses eine Schließstellung versetzbaren Riegel zum Verriegeln des Schließklobens in der Aufnahmeöffnung und eine Schließeinrichtung zum Festlegen des Riegels in der Schließstellung aufweist.

Weitere vorteilhafte Ausführungsformen der Erfindung sind in den Unteransprüchen, der Beschreibung und den Zeichnungen genannt.

Die Erfindung wird nachfolgend anhand eines Ausführungsbeispiels mit Bezug auf die Zeichnungen beschrieben. Es zeigen:
- Fig. 1 bis 3: verschiedene perspektivische Ansichten eines erfindungsgemäßen Schließklobens und einem Riegel gemäß einem Ausführungsbeispiel,
- Fig. 4 und 5: perspektivische Ansichten des Schließklobens von Fig. 1 bis 3 in Explosionsdarstellung, und
- Fig. 6: eine perspektivische Schnittansicht des Schließklobens von Fig. 1.

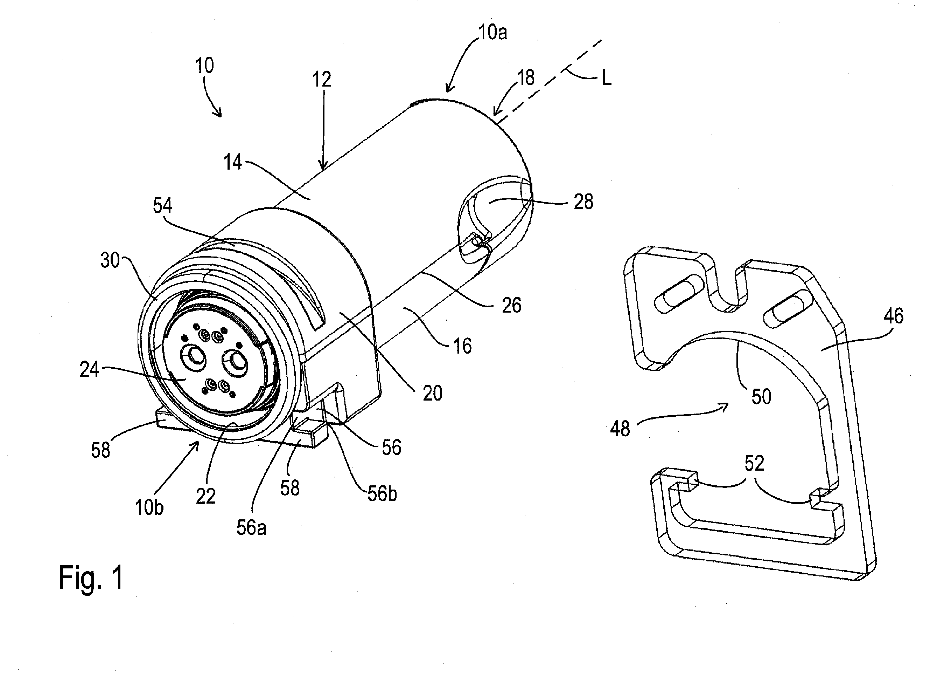

Ein erfindungsgemäßer Schließkloben 10 umfasst gemäß Fig. 1 bis 6 ein sich entlang einer Längsachse L erstreckendes Klobengehäuse 12, welches über einen Großteil seiner Länge einen zylindrischen Querschnitt aufweist. Das Klobengehäuse 12 ist über eine Teillänge entlang einer die Längsachse L enthaltenden Längsmittenebene in ein erstes Gehäuseteil 14 und ein zweites Gehäuseteil 16 geteilt.

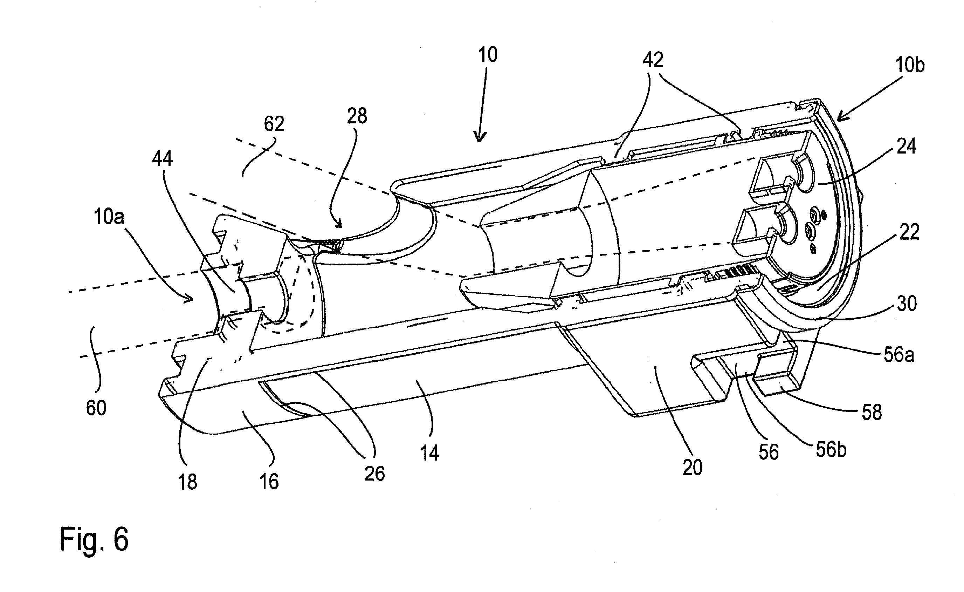

Das Klobengehäuse 12 weist an seinem ersten Ende 10a einen Befestigungsabschnitt 18 zur Befestigung des Schließklobens 10 an einem flexiblen Sicherungselement 60 (in Fig. 6 gestrichelt dargestellt) auf, wobei der Befestigungsabschnitt 18 ausschließlich am ersten Gehäuseteil 14 vorgesehen ist. Bei dem Sicherungselement 60 kann es sich beispielsweise um ein insbesondere kunststoffummanteltes Stahlseil, eine Kette oder dergleichen handeln. Wie insbesondere in Fig. 6 gut zu erkennen ist, weist der Befestigungsabschnitt 18 eine stirnseitig eingebrachte Befestigungsöffnung 44 auf, die in diesem Ausführungsbeispiel als Stufenbohrung ausgebildet ist. In der Befestigungsöffnung 44 wird das Sicherungselement 60 mit Hilfe geeigneter Sicherungsmittel (nicht dargestellt) befestigt.

An dem dem Befestigungsabschnitt 18 gegenüberliegenden zweiten Ende 10b des Klobengehäuses 12 ist ein Verriegelungsabschnitt 20 vorgesehen, welcher sich über beide Gehäuseteile 14, 16 erstreckt und nachfolgend noch näher beschriebene Verriegelungsmittel aufweist.

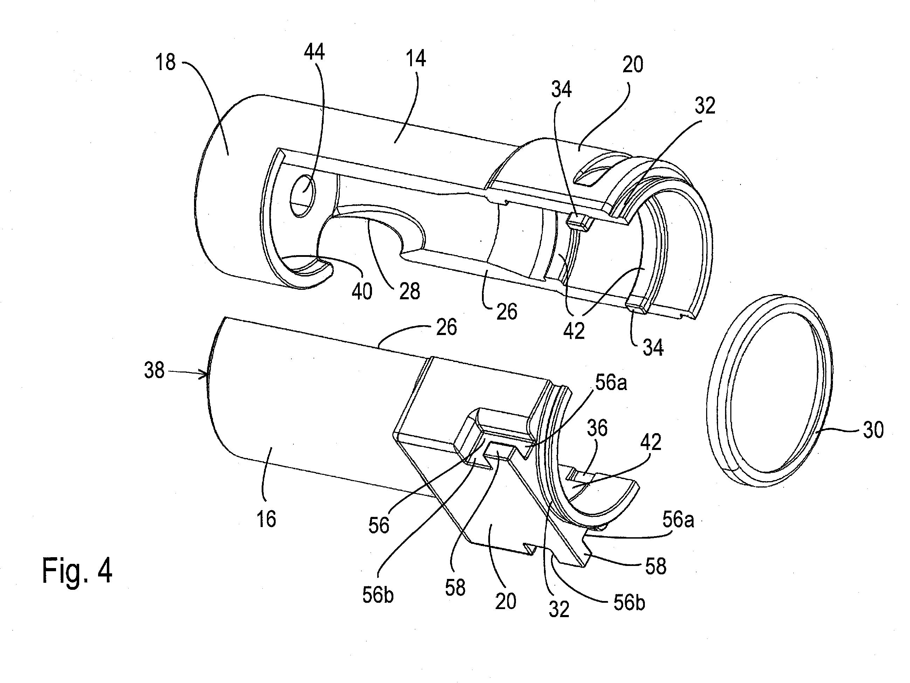

An dem zweiten Ende 10b des Klobengehäuses 12 ist im Bereich des Verriegelungsabschnitts 20 eine stirnseitige Öffnung 22 ausgebildet, in welcher ein mehrpoliger elektrischer Steckverbinder 24 angeordnet ist. Wie in Fig. 4 bis 6 gut zu erkennen ist, sind an der Innenseite des Klobengehäuses 12 zwei radial nach innen ragende, umfänglich umlaufende Vorsprünge 42 ausgebildet, die als Arretierung für den Steckverbinder 24 dienen.

Am Klobengehäuse 12 ist in der Nähe des Befestigungsabschnitts 18 eine Kabeldurchführung 28 vorgesehen. Eine Trennstelle 26 zwischen dem ersten Gehäuseteil 14 und dem zweiten Gehäuseteil 16 verläuft unter anderem durch die Kabeldurchführung 28 hindurch, so dass die Kabeldurchführung 28 teilweise vom ersten Gehäuseteil 14 und teilweise vom zweiten Gehäuseteil 16 umgrenzt wird.

Wie in Fig. 6 gut zu erkennen ist, verläuft die Kabeldurchführung 28 bzw. ein in die Kabeldurchführung 28 eingelegtes, zum Steckverbinder 24 führendes Kabel 62 (gestrichelt dargestellt) vom Befestigungsabschnitt 18 aus betrachtet in einem Winkel von etwa 30° bezogen auf die Längsachse L des Klobengehäuses 12. Der Winkel kann auch durchaus kleiner oder größer als 30°gewählt werden, sollte jedoch nicht mehr als 45° betragen.

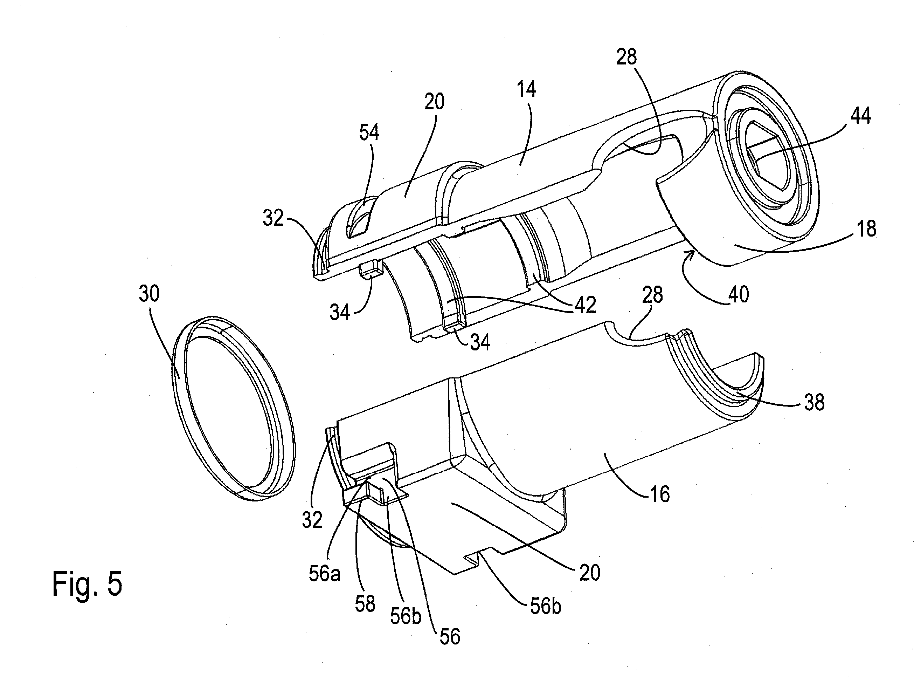

Um die beiden Gehäuseteile 14, 16 im montierten Zustand zusammenzuhalten, sind verschiedene Fixiermittel vorgesehen, die nachfolgend näher beschreiben werden und insbesondere in Fig. 4 und 5 gut zu erkennen sind.

Beide Gehäuseteile 14, 16 weisen an ihrem äußersten Ende im Bereich des Verriegelungsabschnitts 20 eine umlaufende Fixiernut 32 auf, in welcher ein Fixierring 30 aufgenommen oder verrastet ist.

Weiterhin sind am ersten Gehäuseteil 14 im Bereich der Trennstelle 26 Zapfen 34 vorgesehen, die in korrespondierende Zapfenaufnahmen 36 des zweiten Gehäuseteils 16 eingreifen können.

Schließlich weist das zweite Gehäuseteil 16 an seinem dem Befestigungsabschnitt 18 zugewandten Ende einen nach innen versetzten Hintergreifungsabschnitt 38 auf, der in einen zugeordneten Aufnahmeabschnitt 40 des ersten Gehäuseteils 14 eingreift.

Die beiden Gehäuseteile 14, 16 werden im Wesentlichen durch das Zusammenwirken von Hintergreifungsabschnitt 38 und Aufnahmeabschnitt 40 an dem einen Ende und das Zusammenwirken von Fixierring 30 und Fixiernut 32 an dem anderen Ende zusammengehalten. Das Zusammenwirken von Zapfen 34 und Zapfenaufnahmen 36 gewährleistet einen zusätzlichen Schutz gegen ein gegenseitiges Verschieben der beiden Gehäuseteile 14, 16.

Wie insbesondere in Fig. 5 und 6 gut zu erkennen ist, kann der mit dem Kabel 62 verbundene Steckverbinder 24 (in Fig. 5 nicht dargestellt) bei geöffnetem Klobengehäuse 12 in das erste Gehäuseteil 14 eingelegt werden, wobei das Kabel 62 in den durch das erste Gehäuseteil 14 begrenzten Teilabschnitt der Kabeldurchführung 28 eingelegt wird. Anschließend wird das zweite Gehäuseteil 16 aufgesetzt, wobei der Hintergreifungsabschnitt 38 in den Aufnahmeabschnitt 40 eingreift und auch die Zapfen 34 in die Zapfenaufnahmen 36 eingreifen. Durch das Aufsetzen des Fixierrings 30 und dessen Verrasten in der Fixiernut 32 werden beide Gehäuseteile 14, 16 dauerhaft, grundsätzlich jedoch lösbar, aneinander fixiert.

Mit Bezug auf Fig. 1 bis 3 wird nachfolgend der Verriegelungsabschnitt 20 einschließlich der dort vorgesehenen Verriegelungsmittel näher erläutert. Die Verriegelungsmittel sind dafür vorgesehen, mit einem Riegel 46 eines dem Schließkloben 10 zugeordneten Schlosses (nicht dargestellt) zusammenzuwirken, um den Schließkloben 10 in einer Aufnahmeöffnung des Schlosses zu verriegeln, wobei die Verriegelungsmittel auf verschiedenen Seiten der mit der Trennstelle 26 beider Gehäuseteile 14, 16 zusammenfallenden Längsmittenebene angeordnet sind. Der Riegel 46 ist mittels einer entsprechenden Schließeinrichtung in seiner Schließstellung festlegbar.

Der Riegel 46 ist in seiner Grundgestalt als Flachstück ausgebildet und weist eine zentrale Ausnehmung 48 auf, welche in einem Teilabschnitt einen gekrümmten Riegelabschnitt 50 umfasst. Dem Riegelabschnitt 50 gegenüberliegend sind zwei in die Ausnehmung 48 hineinragende, zueinander weisende Riegelarme 52 ausgebildet.

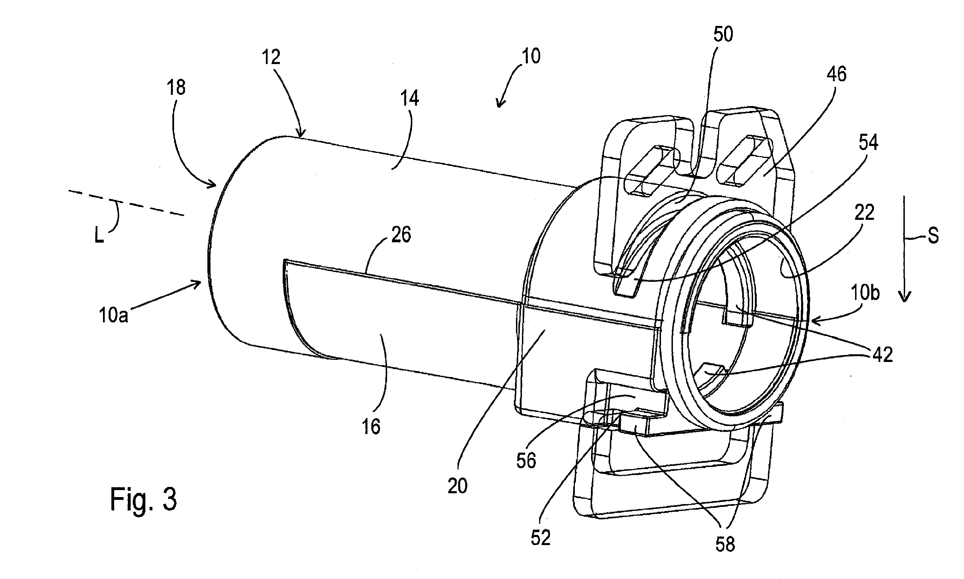

Der sich über das erste Gehäuseteil 14 erstreckende Teil des Verriegelungsabschnitts 20 weist als ein erstes Verriegelungsmittel eine in Umfangsrichtung verlaufende Riegelnut 54 auf, welche in einer Schließstellung des Riegels 46 (Fig. 3) den Riegelabschnitt 50 des Riegels 46 aufnimmt. Der Durchmesser dieses sich über das erste Gehäuseteil 14 erstreckenden Teils des Verriegelungsabschnitts 20 ist gegenüber dem restlichen Teil des ersten Gehäuseteils 14 etwas vergrößert.

Der sich über das zweite Gehäuseteil 16 erstreckende Teil des Verriegelungsabschnitts 20 ist derart erweitert, dass dieser Teil einen annähernd rechteckigen Querschnitt aufweist. Durch diesen nicht-runden Querschnitt wird im Zusammenwirken mit einer komplementär ausgestalten Aufnahmeöffnung des Schlosses gewährleistet, dass der Steckverbinder 24 verdrehsicher in Bezug auf ein in der Aufnahmeöffnung oder Schließklobenaufnahme angeordnetes Gegenstück ausgerichtet ist.

Seitlich an dem rechteckigen Teil des zweiten Gehäuseteils 16 sind zwei L-förmige Eingriffskanäle 56 ausgebildet, die jeweils einen ersten, parallel zur Längsachse L verlaufenden ersten Teilabschnitt 56a und einen hierzu senkrechten, also quer zur Längsachse L und in Umfangsrichtung des Klobengehäuses 10 verlaufenden zweiten Teilabschnitt 56b umfassen und einen jeweiligen Blockiervorsprung 58 umgrenzen. Jeder Blockiervorsprung 58 bildet zusammen mit dem zugeordneten Eingriffskanal 56 ein zweites Verriegelungsmittel. In der Schließstellung des Riegels 46 (Fig. 3) hintergreifen die Riegelarme 52 des Riegels 46 die Blockiervorsprünge 58.

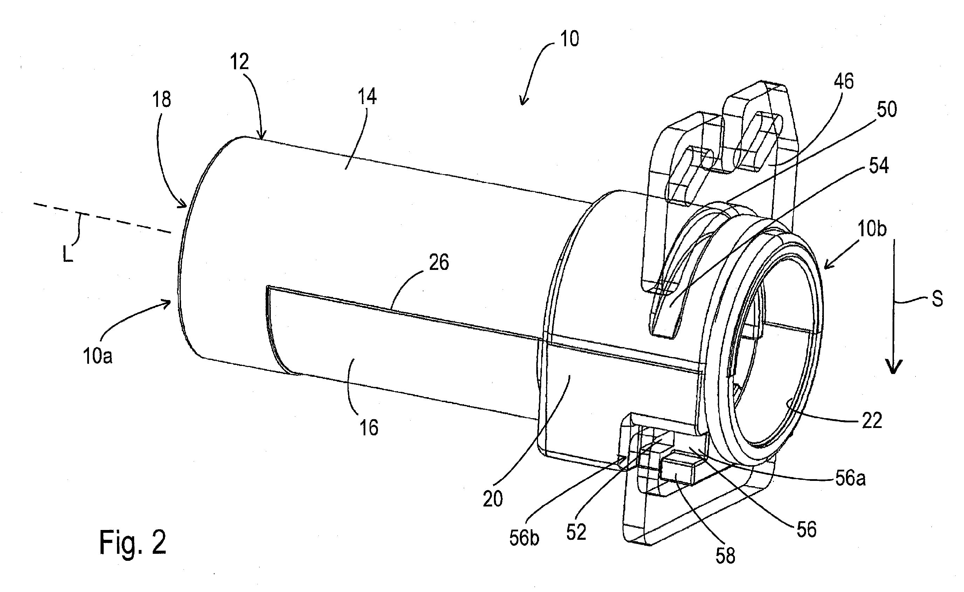

In der Öffnungsstellung des Riegels 46 (Fig. 2) kann der Schließkloben 10 in Richtung seiner Längsachse L in die Aufnahmeöffnung des Schlosses eingesteckt werden, wobei der Schließkloben 10 weitgehend spielfrei in dieser Aufnahmeöffnung aufgenommen sein sollte. Die Riegelarme 52 tauchen dabei in die ersten Teilabschnitte 56a der Eingriffskanäle 56 ein.

Sobald der Schließkloben 10 seine Endstellung erreicht hat, kann der Riegel 46 in seiner senkrecht zur Längsachse L des Klobengehäuses 12 verlaufenden Schließrichtung S in seine Schließstellung (Fig. 3) versetzt werden. Hierbei taucht der Riegelabschnitt 50 in die Riegelnut 54 ein. Zugleich bewegen sich die Riegelarme 52 in die zweiten Teilabschnitte 56b der Eingriffskanäle 56 hinein und hintergreifen nunmehr die Blockiervorsprünge 58. Somit ist das Klobengehäuse 10 an drei verschiedenen, in Umfangsrichtung voneinander beabstandeten Positionen in der Aufnahmeöffnung des Schlosses verriegelt. Zudem ist auch jedes Gehäuseteil 14, 16 separat in der Aufnahmeöffnung verriegelt. Dadurch wird verhindert, dass der Schließkloben 10 etwa durch ein Verkanten in der Aufnahmeöffnung des Schlosses gewaltsam vom Schloss gelöst werden kann. Zudem bewirkt das Zusammenwirken des Riegels 46 mit beiden Gehäuseteilen 14, 16 eine zusätzliche Fixierung der beiden Gehäuseteile 14, 16 relativ zueinander.

### Bezugszeichenliste

- 10: Schließkloben
- 10a: erstes Ende
- 10b: zweites Ende
- 12: Klobengehäuse
- 14: erstes Gehäuse
- 16: zweites Gehäuse
- 18: Befestigungsabschnitt
- 20: Verriegelungsabschnitt
- 22: Öffnung
- 24: Steckverbinder
- 26: Trennstelle
- 28: Kabeldurchführung
- 30: Fixierung
- 32: Fixiernut
- 34: Zapfen
- 36: Zapfenaufnahme
- 38: Hintergreifungsabschnitt
- 40: Aufnahmeabschnitt
- 42: Vorsprung
- 44: Befestigungsöffnung
- 46: Riegel
- 48: Ausnehmung
- 50: Riegelabschnitt
- 52: Riegelarm
- 54: Riegelnut
- 56: Eingriffskanal
- 56a, 56b: Teilabschnitt
- 58: Blockiervorsprung
- 60: Sicherungselement
- 62: Kabel
- L: Längsachse
- S: Schließrichtung

## Patentansprüche

1. Schließkloben (10) für ein Fahrzeugschloss, insbesondere Zweiradschloss, mit einem sich entlang einer Längsachse (L) erstreckenden, ein erstes und ein zweites freies Ende aufweisenden Klobengehäuse (12),
wobei das Klobengehäuse (12) an seinem ersten Ende einen Befestigungsabschnitt (18) zur Befestigung des Schließklobens (12) an einem flexiblen Sicherungselement (60) und an seinem zweiten Ende einen Verriegelungsabschnitt (20) aufweist, welcher zur Verriegelung des Schließklobens (10) an einem zugeordneten Schloss vorgesehen ist,
**dadurch gekennzeichnet,**
**dass** das Klobengehäuse (12) mehrteilig mit zumindest einem ersten Gehäuseteil (14) und einem zweiten Gehäuseteil (16) ausgebildet ist.

2. Schließkloben nach Anspruch 1,
**dadurch gekennzeichnet,**
**dass** das Klobengehäuse (12) längs seiner Längsachse (L) zumindest über eine Teillänge in das erste und das zweite Gehäuseteil (14, 16) geteilt ist.

3. Schließkloben nach Anspruch 2,
**dadurch gekennzeichnet,**
**dass** sich das zweite Gehäuseteil (14) nur über eine Teillänge des Klobengehäuses (12) erstreckt.

4. Schließkloben nach einem der vorhergehenden Ansprüche,
**dadurch gekennzeichnet,**
**dass** der Befestigungsabschnitt (18) ausschließlich an dem ersten Gehäuseteil (14) vorgesehen ist.

5. Schließkloben nach einem der vorhergehenden Ansprüche,
**dadurch gekennzeichnet,**
**dass** ein Endabschnitt des zweiten Gehäuseteils (16), welcher dem Befestigungsabschnitt (18) zugewandt ist, von einer Stirnseite des ersten Endes des Klobengehäuses (12) beabstandet ist.

6. Schließkloben nach Anspruch 5,
**dadurch gekennzeichnet,**
**dass** das zweite Gehäuseteil (16) mit seinem Endabschnitt, welcher dem Befestigungsabschnitt (18) zugewandt ist, mit dem ersten Gehäuseteil (14) formschlüssig in Eingriff steht.

7. Schließkloben nach einem der vorhergehenden Ansprüche,
**dadurch gekennzeichnet,**
**dass** sich das erste und das zweite Gehäuseteil (14, 16) bis an die Stirnseite des zweiten Ende des Klobengehäuses (12) erstrecken.

8. Schließkloben nach einem der vorhergehenden Ansprüche,
**dadurch gekennzeichnet,**
**dass** der Schließkloben (10) einen Fixierring (30) umfasst, welcher in einer im Bereich des Verriegelungsabschnitts (20) vorgesehenen, in Umfangsrichtung umlaufenden, sich sowohl über das erste als auch über das zweite Gehäuseteil (14, 16) erstreckenden Fixiernut (32) angeordnet ist, um die genannten Gehäuseteile (14, 16) aneinander zu fixieren.

9. Schließkloben nach einem der vorhergehenden Ansprüche,
**dadurch gekennzeichnet,**
**dass** das Klobengehäuse (12) im Bereich des Verriegelungsabschnitts (20) eine stirnseitige Öffnung (22) zum Aufnehmen eines elektrischen Steckverbinders (24) aufweist.

10. Schließkloben nach einem der vorhergehenden Ansprüche,
**dadurch gekennzeichnet,**
**dass** das Klobengehäuse (12) wenigstens eine seitliche Kabeldurchführung (28) aufweist.

11. Schließkloben nach Anspruch 10,
**dadurch gekennzeichnet,**
**dass** eine Trennstelle (26) zwischen dem ersten und dem zweiten Gehäuseteil (14, 16) durch die Kabeldurchführung (28) hindurchverläuft; und/oder
**dass** die Kabeldurchführung (28), vom Befestigungsabschnitt (18) aus betrachtet, in einem Winkel von nicht mehr als 45° bezogen auf die Längsachse (L) des Klobengehäuses (12) verläuft.

12. Schließkloben nach einem der vorhergehenden Ansprüche,
**dadurch gekennzeichnet,**
**dass** der Verriegelungsabschnitt (20) des Klobengehäuses (12) mehrere Verriegelungsmittel (54, 58) aufweist, welche sowohl an dem ersten als auch an dem zweiten Gehäuseteil (14, 16) vorgesehen sind.

13. Lade-/Sicherungskabel, mit einem Schließkloben (10) nach einem der vorhergehenden Ansprüche und einem flexiblen Sicherungselement (60), wobei der Befestigungsabschnitt (18) des Schließklobens (10) mit dem Sicherungselement (60) verbunden ist.

14. Lade-/Sicherungskabel nach Anspruch 13, ferner mit einem elektrischen Kabel (62), welches mit einem Steckverbinder (24) verbunden ist, der in einer im Bereich des Verriegelungsabschnitts (20) vorgesehenen stirnseitigen Öffnung (22) des Klobengehäuses (12) angeordnet ist,
wobei das elektrische Kabel (62) und das Sicherungselement (60) vorzugsweise in einem gemeinsamen Mantel geführt sind.

15. Schlossanordnung , mit einem Schließkloben (10) nach einem der Ansprüche 1 bis 13 und mit einem Schloss, das eine Aufnahmeöffnung zum Einführen des Schließklobens (10), einem senkrecht zu der Längssachse (L) des Klobengehäuses (12) in eine Schließstellung versetzbaren Riegel (46) zum Verriegeln des Schließklobens (10) in der Aufnahmeöffnung, und eine Schließeinrichtung zum Festlegen des Riegels (46) in der Schließstellung aufweist.
